(19) **Europäisches Patentamt**

**European Patent Office**

**Office européen des brevets**

(11) **EP 1 183 663 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(21) Anmeldenummer: **99922408.2**

(22) Anmeldetag: **03.06.1999**

(51) Int Cl.7: **G08B 19/02**

(86) Internationale Anmeldenummer:
**PCT/IB99/00999**

(87) Internationale Veröffentlichungsnummer:
**WO 00/075896 (14.12.2000 Gazette 2000/50)**

(54) **VERFAHREN UND WARNEINRICHTUNG ZUR ERZEUGUNG EINES GLÄTTEFRÜHWARNSIGNALS FÜR STRASSEN**

METHOD AND WARNING DEVICE FOR GENERATING GLAZED FROST EARLY WARNING SIGNAL FOR ROADS

PROCEDE ET DISPOSITIF D'ALERTE POUR PRODUIRE UN SIGNAL D'ALERTE PRECOCE DE PRESENCE DE VERGLAS SUR DES ROUTES

(84) Benannte Vertragsstaaten:
**AT BE CH DE DK ES FI FR GB GR IE IT LI LU NL SE**
Benannte Erstreckungsstaaten:
**RO**

(43) Veröffentlichungstag der Anmeldung:
**06.03.2002 Patentblatt 2002/10**

(73) Patentinhaber: **Boschung Mecatronic AG**
**1763 Granges-Paccot (CH)**

(72) Erfinder:
• **BOSCHUNG, Marcel, Jr.**
**CH-1740 Neyruz (CH)**
• **HEIERLI, Joachim**
**CH-1580 Avenches (CH)**

(74) Vertreter: **Blum, Rudolf Emil Ernst et al**
**c/o E. Blum & Co**
**Patentanwälte**
**Vorderberg 11**
**8044 Zürich (CH)**

(56) Entgegenhaltungen:
**EP-A- 0 292 639      WO-A-97/18442**
**US-A- 5 850 619**

• **GRELL G.A., DUDHIA J. STAUFFER D.R.: "A Description of the Fifth-Generation Penn State/NCAR Mesoscale Model (MM5)" NCAR TECHNICAL NOTE NCAT/TN-398 + STR, [Online] Juni 1995 (1995-06), XP002132234 Retrieved from the Internet: <URL:http://www.mmm.ucar.edu/mm5/mmm 5-home .html> [retrieved on 2000-02-25]**
• **SHAO J ET AL: "An automated nowcasting model of road surface temperature and state for winter road maintenance" JOURNAL OF APPLIED METEOROLOGY, AUG. 1996, AMERICAN METEOROL. SOC, USA, Bd. 35, Nr. 8, Seiten 1352-1361, XP000884600 ISSN: 0894-8763**

**Beschreibung**

Technisches Gebiet

Die Erfindung betrifft ein Verfahren zur Erzeugung eines Glättefrühwarnsignals gemäss Oberbegriff des Anspruchs 1 sowie ein Verfahren zur Bereitstellung mindestens einer virtuellen Messstation gemäss Oberbegriff des Anspruchs 10. Ferner betrifft die Erfindung eine Strassenglättewarneinrichtung gemäss Oberbegriff des Anspruchs 14.

Stand der Technik

Unter Glättefrühwarnung versteht man die kurzfristige Prognose von Vereisung auf Strassen und Brücken. Zweck dieser Frühwarnung ist der gezielte präventive Einsatz des Streudienstes oder automatischer Taumittelsprühanlagen zur Vermeidung gefährlicher Strassenzustände.

Gegenwärtig wird die Glättefrühwarnung für vorbestimmte Stellen des Strassennetzes durchgeführt, an welchen Messstationen mit aktiven oder passiven Sonden vorgesehen sind, welche die sich anbahnende Eisbildung erfassen. So sind insbesondere Sonden für die Lufttemperatur, die Bodentemperatur, die Fahrbahnfeuchte und den Niederschlag vorgesehen sowie Sonden für die Gefriertemperatur der auf der Fahrbahn befindlichen Flüssigkeit. Die Messwerte der Sonden werden an eine Auswerteinrichtung gegeben, welche aus den Messwerten eine Alarmmeldung ableitet. Die Glättefrühwarnungen sind daher auf kurze, ausgesuchte Streckenabschnitte begrenzt, für welche die Messstationen angeordnet sind. Eine Ausdehnung der Glättefrühwarnung auf mehr Streckenabschnitte bedingt dabei die Aufstellung von weiteren Messstationen, wobei Kostengründe die an sich wünschbare weitgehende Abdeckung des Strassennetzes mit Messstationen verhindern. Es ist daher zur Erzielung einer flächendeckenden Glättefrühwarnung vorgeschlagen worden, das gesamte Strassennetz thermografisch zu erfassen und daraus eine Glättefrühwarnung abzuleiten. Um flächendeckende Glättefrühwarnung anzustreben, wird dabei in drei verschiedenen Nächten mit unterschiedlichen Wetterbedingungen die Oberflächentemperatur des Belages im gesamten Strassennetz thermografiert. Es ergeben sich drei charakteristische Temperaturprofile, die "kalte", bzw. "warme" Streckenabschnitte aufzeigen. Diese Profile werden für die räumliche Interpolation des gegenwärtigen Strassenzustandes ausserhalb der Messstation herangezogen. Diese Methode hat Nachteile. Erstens reicht die Anzahl der Temperaturprofile bei weitem nicht aus, alle Wetterlagen und Tageszeiten abzudecken, was einer groben Vereinfachung der Interpolation gleichkommt, die durchaus zu Informationsverlust führen kann. Zweitens wird die Dynamik des Wärme- und Feuchteaustausches nicht berücksichtigt, da jede thermische Kartografie zwangsläufig eine Momentaufnahme des Strassenzustandes ist. Die Glättegefährdung eines Strassenabschnittes hängt aber von den vorhergehenden Wetterbedingungen ab. EP-A-0 292 639 zeigt ein Verfahren zur Erzeugung eines Glättefrühwarnsignals bei einem Strassenglättefrühwarnsystem. Dabei werden generelle Vorhersagen für Gebiete getroffen, in denen sich keine Messstationen befinden. Zum Beispiel wird bei kritischen Temperaturen für alle Hochlagen Glättealarm gegeben.

Darstellung der Erfindung

Der Erfindung liegt daher die Aufgabe zugrunde ein Verfahren zu schaffen, mittels welchem bei geringem Kostenaufwand eine weitgehende Erfassung des Strassennetzes und dennoch eine genaue Glatteisfrühwarnung möglich ist.

Dies wird bei einem Verfahren der eingangs genannten Art durch die kennzeichnenden Merkmale des Anspruchs 1 erreicht.

Dadurch, dass an beliebigen vorbestimmten Stellen des Strassennetzes simulierte oder "virtuelle" Messstationen geschaffen werden, kann die Abdeckung des Strassennetzes ohne grossen apparativen Aufwand so deutlich erhöht werden, dass praktisch eine lückenlose Erfassung möglich wird. Die virtuellen Messstationen werden dabei mit Messdaten von realen Messstationen versorgt (was indes nicht ausschliesst, dass eine solche simulierte Messstation auch mit einer tatsächlich an der vorbestimmten Stelle vorhandenen Sonde ausgerüstet sein kann) und besitzen einen ortsspezifischen Parametersatz. Die simulierte Messstation kann dabei in der Auswerteinrichtung oder in einer davon separaten Schaltung gebildet werden.

Der Erfindung liegt ferner die Aufgabe zugrunde, ein Verfahren zur Bereitstellung solcher virtuellen Messstationen zu schaffen. Diese Aufgabe wird mit den kennzeichnenden Merkmalen des Anspruchs 10 gelöst.

Ferner liegt der Erfindung die Aufgabe zugrunde, eine Strassenglättefrühwarneinrichtung zu schaffen, bei welcher mit geringem apparativem Aufwand eine möglichst weitgehende Abdeckung des Strassennetzes möglich ist.

Diese Aufgabe wird bei einer Strassenglättefrühwarneinrichtung der eingangs genannten Art mit den kennzeichnenden Merkmalen des Anspruchs 14 gelöst.

Kurze Beschreibung der Zeichnungen

Im folgenden werden Ausführungsbeispiele der Erfindung anhand der Zeichnungen näher erläutert. Dabei zeigt

Figur 1 schematisch eine Teilansicht eines Strassennetzes mit der Lage von realen und virtuellen Messstationen;
Figur 2 ein Flussdiagramm für die Parametrisation der Messstationen;
Figur 3 ein Flussdiagramm für die Bildung der Glättefrühwarnung einer virtuellen Messstation, und
Figuren 4a, 4b schematisch ein Pyrradiometer bzw. ein Strassenstück, das zur Bestimmung der Bewölkung eingesetzt wird.

Bester Weg zur Ausführung der Erfindung

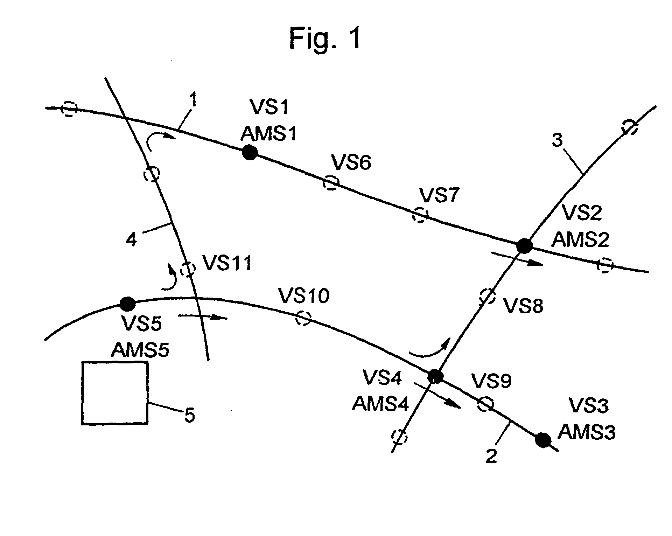

Nachfolgend wird das Vorgehen zur Bildung einer virtuellen Messstation und deren Betrieb näher erläutert. Figur 1 zeigt dabei schematisch mehrere Strassen 1, 2, 3, 4 eines Strassennetzes sowie als kastenförmiges Symbol eine Auswerteinrichtung 5. Diese ist z.B. in einem Werkhof des Strassenunterhaltsdienstes untergebracht und wird z. B. von einem Rechner und Schnittstellenschaltungen zur Verbindung des Rechners mit den einzelnen Messstationen gebildet. Der Rechner ist zur Abgabe eines Glättefrühwarnsignales ausgestaltet und bildet zusammen mit den Messstationen und den Verbindungsmitteln das Glättefrühwarnsystem (GFS). In der Figur sind mehrere herkömmliche automatische Messstationen (AMS) als AMS1 bis AMS5 symbolisch als Punkte im Strassennetz dargestellt. Solche automatischen Messstationen sind grundsätzlich bekannt und werden hier nicht im einzelnen dargestellt. Sie umfassen z.B. Sonden für Lufttemperatur, Bodentemperatur, Fahrbahnfeuchte, Niederschlag, relative Feuchte oder Taupunkt, Gefriertemperatur, Luftgeschwindigkeit, Luftdruck und Verkehrsmenge. Die einzelnen Sonden sind dabei z.B. an Masten oder im Fahrbahnbelag angeordnet und werden hier, da bekannt, nicht weiter beschrieben. Die Daten der Sonden werden über Leitungen oder über Funk an die Auswerteinrichtung abgegeben. Diese kann daraus ein Glättefrühwarnsignal für den entsprechenden Messort erzeugen, das als Signal für einen ganzen Strassenabschnitt verwendet wird. Gemäss der Erfindung ist nun mindestens eine virtuelle oder simulierte Messstation (VS) vorgesehen, wobei in der Figur 1 als Beispiel die virtuellen Messstationen VS1 bis VS11 eingezeichnet sind. Diese virtuellen Messstationen weisen in der Regel gar keine Sonde auf, was indes nicht ausschliesst, dass trotzdem eine Sonde für einen der Messwerte vorhanden sein könnte; es ist aber nicht die Sondenbestückung einer automatischen Messstation AMS vorhanden. Da keine Sonden bei den virtuellen Messstationen vorgesehen sind, besitzen diese auch keine physische Verbindung vom Ort der virtuellen Station zur Auswerteinrichtung 5, sondern werden in dieser (oder in einer anderen Schaltung oder Einrichtung) als virtuelle Stationen aufgeführt. Virtuelle Stationen können auch an denselben Orten vorgesehen sein, an denen automatische Messstationen vorhanden sind, was nachfolgend noch näher erläutert wird; in Figur 1 ist dies für AMS1/VS1, AMS4/VS4 und AMS5/VS5 als Beispiel dargestellt. Da die virtuellen Stationen in der Regel ohne apparativen Aufwand an der Strasse und ohne Verbindung zur Auswerteinrichtung betrieben werden können, sind diese kostengünstig und können daher in grosser Zahl im Strassennetz vorgesehen werden, so dass sich eine flächendeckende Überwachung des Strassennetzes realisieren lässt. Die Einleitung des Strassennetzes in Sektoren mit einer virtuellen Station bzw. deren Anordnung kann nach Erfahrungswerten des Vorliegens glättegefährdeter Stellen oder z.B. mittels Thermografie bestimmt werden.

Hauptbestandteil jeder virtuellen Station ist ein Programm, welches auf die Messdaten benachbarter automatischer Messstationen zugreift und Parameter enthält oder auf diese zugreift, die für den Ort der jeweiligen virtuellen Messstation spezifisch sind. Es werden daher in der Regel eine Anzahl automatischer Messstationen AMS benötigt, um ein Glättefrühwarnsystem mit virtuellen Messstationen erstellen und betreiben zu können.

Für die Erstellung der virtuellen Stationen werden zunächst die automatischen Messstationen ausgesucht, die in Frage kommen um alle notwendigen Informationen (Messdaten und Parameter) für die virtuellen Stationen zu sammeln. Es werden dabei die verschiedenen Bauarten im Strassennetz berücksichtigt, z.B. Beläge mit verschiedenen Materialeigenschaften, wobei jede Bauart durch eine automatische Messstation vertreten sein soll, damit man die Parameter dieser Bauart nach deren Bestimmung für die virtuellen Stationen an Orten mit der selben Belagsbauart verwenden kann. Weiter muss die Streustrecke für das Taumittel berücksichtigt werden. Pro Streustrecke sollte mindestens eine automatische Messstation vorhanden sein. In der Figur 1 sind die Streustrecken ausgehend vom Werkhof bei AMS5 als Pfeile dargestellt.

Die bevorzugt erhobenen Wetterdaten für die Glättefrühwarnung sind Niederschlagsart und -Menge, Lufttemperatur, Bewölkung, Taupunkt und Windstärke. Diese Daten werden zunächst punktuell durch das meteorologische GFS-Messnetz erhoben, d.h. für jede automatische Messstation im GFS-Netz ist ein entsprechender Datensatz verfügbar. Auch jede virtuelle Station benötigt ihren meteorologischen Datensatz. Dieser kann auf einfache Weise von einer bezüglich der meteorologischen Daten ähnlich situierten, benachbarten automatischen Messstation ohne Änderung übernommen werden. So könnte z.B. der meteorologische Datensatz der automatischen Messstation AMS1 ebenfalls für die virtuelle Station VS6 verwendet werden. Dies erfolgt z.B. derart, dass die Auswerteinrichtung 5 die Information enthält, dass die übermittelten meteorologischen Daten von AMS1 auch für VS1 gelten. Um einen genaueren Satz von Wetterdaten für die jeweiligen Stationen VS zu erhalten können diese Daten als Funktion der Wetterdaten mehrerer automatischer Messstationen (oder auch virtueller Stationen) bestimmt werden, z.B.: Wert (Station VS6) = Funktion (Wert (Station AMS1, Station AMS2 ...)). Zum Beispiel der Wert der Lufttemperatur von VS6 wird als Funktion vom Wert der Lufttemperatur von AMS1 und AMS2 bestimmt. Dasselbe wird für die Werte von Niederschlag, Taupunkt, Bewölkung und Windgeschwindigkeit ausgeführt. Als Funktionen kommen lineare bzw. polynomiale Regressionen in Frage. Diese Übernahme von Wetterdaten für einen anderen Ort muss zwar zufriedenstellend, aber nicht perfekt sein.

Ferner umfasst die Bildung jeder virtuellen Station eine Parametrisation, bei welcher für die Station geltende Parameter, z.B. Belagseigenschaften, Horizontverlauf, der Station zugeordnet werden. Dabei können bestimmte Parameter von jenen Messstationen übernommen werden, die gleich gebaut sind. Zum Beispiel werden die Eigenschaften des Belags an einer bestimmten virtuellen Station von jener Messstation AMS übernommen, die den gleichen Belag aufweist. Nicht alle Parameter können so bestimmt werden: Der Horizont, der sichtbare Himmelsanteil und der Belagstyp beispielsweise nicht. Diese Daten müssen individuell an jeder virtuellen Station ermittelt werden. Zum Beispiel wird der Horizont fotografisch oder per Handmessung bestimmt. Wie erfolgreich die virtuelle Station die realen Verhältnisse erfasst hängt davon ab, wie genau die Parametrisation zutrifft. Bei schwierigen Fällen kann jederzeit eine mobile Messstation temporär, z.B. zwei Wochen, am Standort der virtuellen Station bereitgestellt werden, um die Optimierung der Parametrisation vorzunehmen.

Die folgende Tabelle zeigt die Parameter einer virtuellen Station

| 01 | Text | Name der virtuellen Station (VS) |
|---|---|---|
| 02 | # | Identifikator der VS |
| 03 | # | Dazugehörende Klimazone |
| 04 | # | Quell-AMS für Klimadaten |
| 05 | # | Quell-AMS für Belagsart |
| 06 | # | Quell-AMS für Gefriertemperatur bzw. Salzgehalt (letzte MAS vor VS in Streuroute) |
| 07 | deg o. rad | Längengrad |
| 08 | deg o. rad | Breitengrad |
| 09 | m | Höhe über Meer |
| 10 | 0,1,2 | Art der Randbedingung der Fahrbahn (0: Erdreich, 1: tiefe Brücke, 2: hohe Brücke) |
| 11 | deg o. rad | Durchschnittlicher Horizontalwinkel im Sektor E-SE |
| 12 | deg o. rad | " S-SE |
| 13 | deg o. rad | " S-SW |
| 14 | deg o. rad | " W-SW |
| 15 | 0.5 - 1.3 | Lokaler Windfaktor gegenüber offener Lage |
| 16 | # | Identifikator der Luftdruck-Referenzstation im GFS System |
| 17 | 0-100 % | Infrarot Emissivität der Fahrbahn |
| 18 | 0-100 % | Albedo der Fahrbahn |
| 19 | m | Breite der Fahrbahn |
| 20 | 0-100 % | Sichtbarer Anteil der Himmelshalbkugel in % |
| 21 | kg/m$^3$ | Materialdichte des Belages (Schicht 0) |
| 22 | kg/m$^3$ | "      der Schicht 1 |
| 23 | kg/m$^3$ | "      der Schicht 2 |
| 24 | kg/m$^3$ | "      der Schicht 3 |
| 25 | J/kg/K | Spezifische Wärmekapazität des Belages (Schicht 0) |
| 26 | J/kg/K | "      der Schicht 1 |
| 27 | J/kg/K | "      der Schicht 2 |
| 28 | J/kg/K | "      der Schicht 3 |
| 29 | W/m/K | Thermische Konduktivität des Belages (Schicht 0) |
| 30 | W/m/K | "      der Schicht 1 |
| 31 | W/m/K | "      der Schicht 2 |
| 32 | W/m/K | "      der Schicht 3 |
| 33 | m | Tiefe der oberen Grenze der Schicht 1 |
| 34 | m | "      der Schicht 2 |

(fortgesetzt)

| 35 | m | " der Schicht 3 |
|----|----|----------------|
| 36 | m | Gesamttiefe der Fahrbahn für die Rechnung |
| 37 | # | Belagstyp |

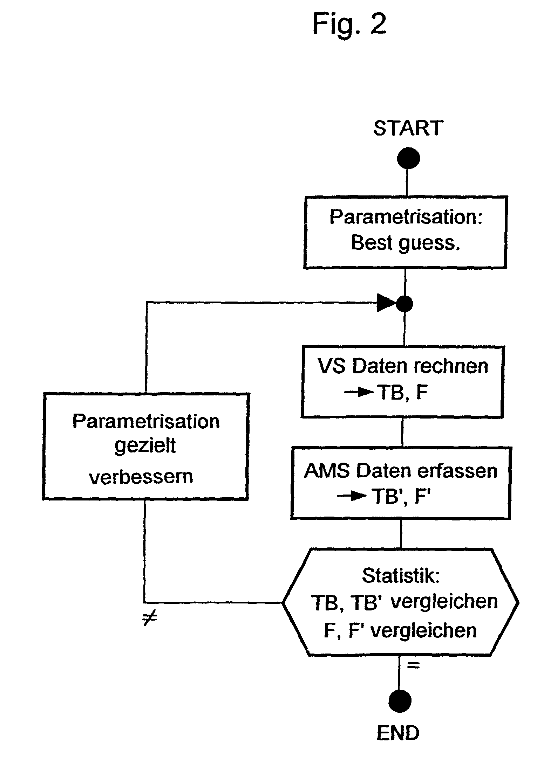

Wie gesagt, können Parameter aufgrund der Lage der virtuellen Station einfach eingesetzt werden, z.B. Randbedingung (Parameter 10) und Materialdichte des Belages (Parameter 21-24) oder können ermittelt werden, z.B. Parameter 11-14. Andere Parameter, z.B. der Wert des Reflexionsvermögens des Belags (Parameter 17, 18) oder die Wärmekapazität des Belages (Parameter 25-28) werden vorzugsweise derart ermittelt und optimiert, dass an Stellen, an denen automatische Messstationen vorhanden sind, auch virtuelle Stationen gebildet werden und die zu bestimmenden Parameter aus Messwerten der automatischen Messstation abgeleitet werden, wobei die Parameter zunächst grob angenommen werden ("best guess") und danach mit diesen Parametern und den meteorologischen Daten, die von der automatischen Messstation übernommen werden, die für die Glättewarnung notwendigen Grössen berechnet werden. Durch Vergleich mit den durch die Sonden der automatischen Messstation gemessenen Grössen können dann die Parameter verbessert werden und die verbesserten Parameter erneut der Berechnung zugrunde gelegt werden. Figur 2 zeigt den entsprechenden Ablauf, wobei für die virtuelle Station die Werte der Grössen TB (Temperatur des Belages) und F (Belagsfeuchte) gerechnet werden und mit den Werten der Grössen TB und F der automatischen Messstation verglichen werden, die eine Belagstemperatur-Sonde und eine Belagsfeuchte-Sonde aufweist, womit sich die gesamte Parametrisation der Messstelle optimieren lässt. Zwei weitere Beispiele: Der optimale Wert des Reflexionsvermögens des Belags wird an Schönwettertagen anhand der Amplitude der Belagstemperaturen bestimmt. Die Wärmekapazität des Belages wird durch die Analyse einer Phasenverschiebung der Belagstemperatur ausfindig gemacht, usw. Sind Messwerte verfügbar, werden diese natürlich eingesetzt. Ziel ist die maximale Übereinkunft der Ergebnisse der virtuellen Station mit den Messdaten derselben Station.

Es stehen nun für die virtuellen Stationen die Parameter zur Verfügung sowie die meteorologischen Daten.

Zur Erzeugung eines Glättefrühwarnsignals ist es weiter erforderlich die Gefriertemperatur der auf der Strasse befindlichen Flüssigkeit zu kennen, welche bei den Bedingungen, die zu einer Glättefrühwarnung führen, in der Regel eine wässrige Taumittellösung ist. Bei den automatischen Messstationen sind dazu spezielle Gefrierpunktsonden in der Fahrbahn vorgesehen, welche ein Flüssigkeitsmuster abkühlen und die Gefriertemperatur bestimmen; dieses ist bekannt und wird hier nicht weiter erläutert.

Für die Bestimmung der Gefriertemperatur steht indes am Ort der virtuellen Station in der Regel keine Sonde zur Verfügung, so dass die Bestimmung der Gefriertemperatur bei der virtuellen Station auf andere Weise erfolgt, wobei die zwei folgenden Bestimmungsarten einzeln (oder auch kombiniert) eingesetzt werden können: Die eine Möglichkeit beruht auf der Übernahme der gemessenen Gefriertemperatur von einer Messstation mit Sonde, die auf derselben Streustrecke wie die betreffende virtuelle Station Liegt. So kann z.B. für die virtuelle Station VS6 die gemessene Gefriertemperatur der automatischen Messstation AMS1 übernommen werden, nachdem der Taumittelstreuwagen die Station AMS1 passiert hat. Es könnte auch die Gefriertemperatur von AMS2 übernommen werden, doch muss dann zugewartet werden, bis der Streuwagen diese Stelle passiert hat.

Bei der zweiten Möglichkeit wird von Streuwagen ausgegangen, welche den Streuort und die Streumenge erfassen, ersteres z.B. mittels einer GPS-Einrichtung. Solche Streuwagen sind bekannt (z.B. Boschung BoSat System). Einerseits wird mittels dem Boschung BoSat System (oder einer anderen mobilen Messapparatur) bei jedem Streueinsatz die momentane Menge Streugut aufgezeichnet und an die Datenbank bzw. Auswerteinrichtung 5 weitergeleitet. Angegeben wird z.B. dass von VS6 nach VS7 10 g/m$^2$ NaCl gestreut wurden. Andererseits rechnet die virtuelle Station andauernd die hydrische Bilanz (siehe nächster Abschnitt) und bestimmt somit die momentane Wassermenge pro Quadratmeter Fahrbahn. Jeder Streueinsatz ergibt also einen Fixpunkt für die Salzkonzentration. Bis zum nächsten Einsatz wird die Verdünnung der Salzlösung berechnet, die durch hinzukommenden Niederschlag und Wegschwemmen bzw. Verdampfung verursacht wird. Voraussetzung ist eine quantifizierte Angabe der Niederschlagsmenge bei den Messstationen, wofür bei den AMS Sonden vorhanden sind, deren Messwerte für virtuelle Stationen übernommen werden.

Die Berechnung der Wassermenge auf der Fahrbahn und der Gefriertemperatur beruht auf folgendem Ansatz (hydrische Bilanz auf der Fahrbahnfläche) :

$$dm/dt = p(t)+1(m, ...)+a(m)+d(m,...) \ [kg/s/m^2]$$

Wobei:

m die Quantität Wasser auf der Fahrbahn [kg/m$^2$] ist,

*p(t)* die Niederschlagsrate, exklusive *1(m,...)* ist,

*1(m,TL,TB,RF)* die Niederschlagsrate durch Kondensation und Verdampfung allein ist,

*a(m)* die Absorption des Wassers durch die Fahrbahn ist, und

*d(m, Verkehr)* die Abflussrate des Wassers ist.

Der Quotient *m/(m+p(t)+1(m,...))* bestimmt die augenblickliche Verdünnung des Streusalzes auf der Fahrbahn, und *d(m,...)/m* drückt den Salzverlust der Fahrbahn aus. In diesem Zusammenhang mit der Konzentration der wässrigen Lösung auf der Fahrbahn steht die Gefriertemperatur (Phasendiagramm des Streusalzes oder Raoultsches Gesetz bei niedrigen Konzentrationen).

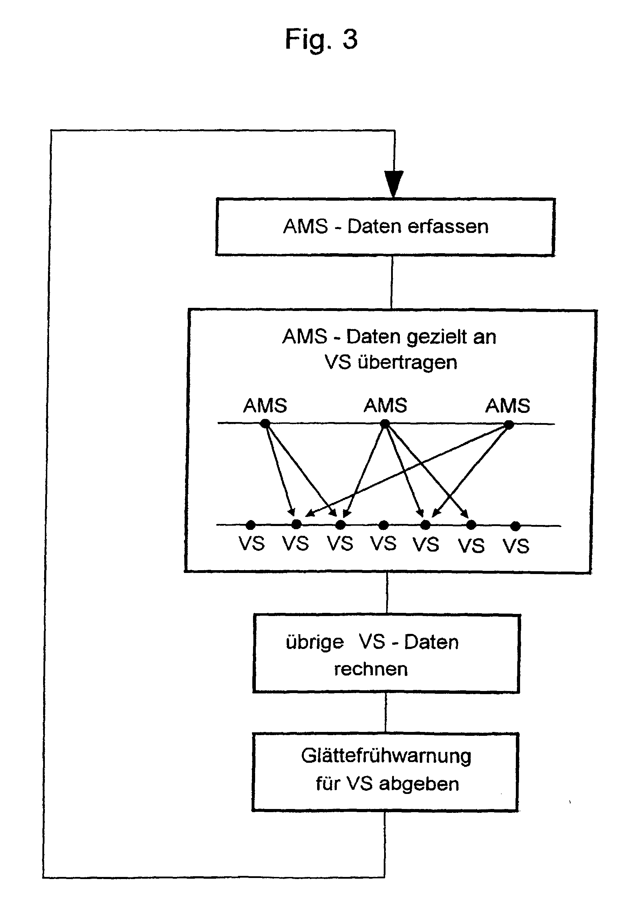

Alle nötigen Daten sind jetzt für jede virtuelle Station verfügbar. Die thermische Berechnung kann beginnen. Anstatt die Methode hier ausdrücklich zu beschreiben, wird hier auf eine Schrift verwiesen, die eine solche Methode beschreibt. Die beschriebene Methode oder jede andere könnte verwendet werden, solange sie denselben Ansprüchen an Genauigkeit genügt. Das Rechenverfahren muss daher alle wesentlichen physikalischen Prozesse berücksichtigen. Ob es sich dabei um eine physikalische, statistische oder anderweitige Methode handelt ist nicht von Belang. Das Ziel der "virtuelle Station" genannten Berechnung ist die Glättefrühwarnung. Dies beinhaltet die Angabe der Belagstemperatur und der Belagsfeuchte, aus denen der Strassenzustand und die Vereisungsalarme logisch abgeleitet werden. Die Berechnung soll im Zeitschritt von 6 bis 15 Minuten nachgeführt werden. Figur 3 zeigt schematisch den Ablauf der Berechnung, welcher je nach Resultat zu einer Glatteiswarnung führt oder nicht.

Für die thermische Berechnung wird dabei auf die Schrift Nefzger H., Karpot A., Einfluss von Strahlung und Mikroklima auf Strassenwetterprognosen, Bundesministerium für wirtschaftliche Strassenforschung, Heft 466 verwiesen und insbesondere auf deren Teil 3 (Energiebilanzmodell zur Prognose der Fahrbahnoberflächentemperatur) mit den Gleichungen (11) bis (19), welcher Teil hiermit in diese Anmeldung aufgenommen wird, um als Beispiel für eine mögliche thermische Berechnung zu dienen.

Die Datenkontrolle der virtuellen Stationen geschieht wie folgt. Mittels dem Boschung BoSat System (oder einer anderen mobilen Messapparatur) werden verschiedene Zustände der Fahrbahn durch Sonden erfasst, die auf den Fahrzeugen der Werkhöfe und/oder Polizeien montiert sind: z.B. Luft- und Belagstemperatur, Luftfeuchtigkeit und Gefriertemperatur. Diese Daten können auf unregelmässiger Basis bei Durchfahrten an den Standorten der virtuellen Stationen gemessen werden. Dies ergibt je einen Messpunkt, der den Quervergleich mit den aktuellen Rechendaten der virtuellen Station erlaubt. Das Konzept "virtuelle Station" ergibt gegenüber der Methode mittels Thermografie folgende Vorteile. Erstens bleibt die Prozessdynamik beibehalten. Die Datenbank bildet das Gedächtnis des Systems, das Rechenverfahren setzt es um. Jede Wetterlage wird automatisch in die Berechnung einbezogen. Zweitens kann das Verfahren an beliebigen Standorten eingesetzt werden. Voraussetzung ist die Kommunikation mit einem beliebigen meteorologischen Messnetz, wie z.B. das GFS-Messnetz, welches in der bisherigen Beschreibung als Datenlieferant für die meteorologischen Daten beschrieben worden ist. Die meteorologischen Daten können aber auch von einem anderen Messnetz geliefert werden, z.B. dem ANETZ der SMA (Schweizerische Meteorologische Anstalt). Drittens werden keine relevanten Wärmeund Feuchteströme vernachlässigt. Insbesondere kann die hydrische Bilanz im Rechenmodell vollumfänglich berücksichtigt werden. Viertens ist eine virtuelle Station naturgemäss kostengünstiger als eine Messstation, da sie hauptsächlich oder ausschliesslich aus Software besteht.

Die Genauigkeit einer virtuellen Station mag gegenüber jener der Thermografie zunächst geringer erscheinen, da letztere eine Messung der drei Temperaturprofile mit hoher Auflösung und Genauigkeit aufweist. Es gilt aber zu bedenken, dass diese Profile lediglich eine Momentaufnahme sind, die eine ganz bestimmte Wetterlage, Tageszeit, Temperatur und vorausgehende Strassen- und Wetterbedingungen reflektieren. Sie eignen sich daher schlecht für eine Interpolation bei beliebigen Bedingungen. Ein substanzieller Genauigkeitsverlust muss also in Kauf genommen werden. Diesen macht die virtuelle Station durch ihre flexible Berechnung wett.

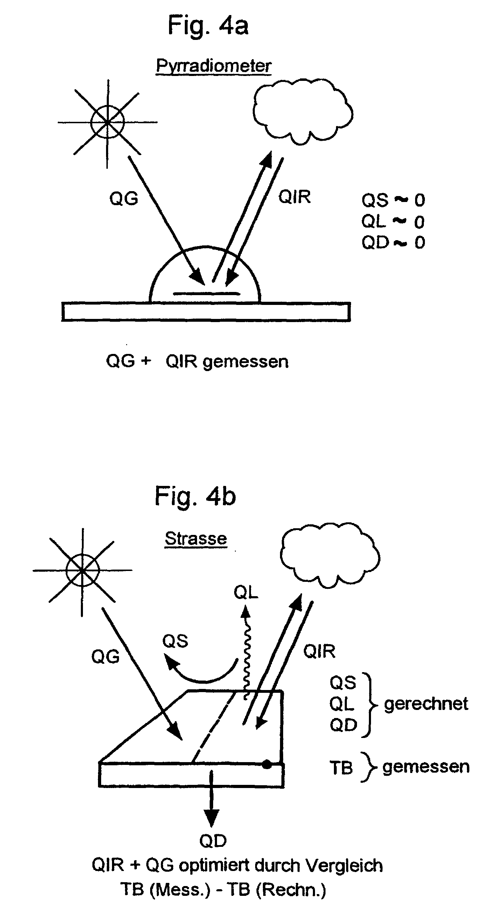

Ein weiterer Aspekt der Erfindung betrifft die Erfassung der Bewölkung, welche in die Berechnung der thermischen Bilanz gemäss Gleichung (11) eingeht. Die Erfassung der Bewölkung erfordert entweder menschliche Beobachtung oder den Einsatz eines Messgerätes zur Bestimmung der Infrarot-Strahlungsbilanz (Pyrradiometer). Allerdings sind diese Geräte anfällig auf Verschmutzung und aufwendig bezüglich Wartung. Deshalb wird ihr Einsatz in Strassenmessnetzen nicht bevorzugt. Statt dessen kann die Strasse selbst als Ersatz-Pyrradiometer eingesetzt werden: Die Belagstemperaturen werden in einem Näherungsverfahren mit verschiedenen angenommenen Bewölkungsgrad gerechnet, bis sie mit den gemessenen Belagstemperaturen übereinstimmen. Dieser Bewölkungsgrad wird dann als aktueller Messwert autgefasst und in der Datenbank abgelegt. Die Figuren 4a und 4b zeigen schematisch einerseits ein bekanntes Pyrradiometer, mittels welchem die Globalstrahlung QG (0,3-3,0 μm) und die Infrarotstrahlung QTR (3,0 - 50 μm) gemessen wird, im Pyrradiometer werden der Latentwärmefluss (Kondensation, Verdampfung usw.) QL, der sensible Wärmefluss (Konvektion, Wind) QS und die Wärmeleitung innerhalb der Strasse (Diffusion) zu Null angenommen wird. Bei der Verwendung der Strasse als Pyrradiometer werden QL, QS und QD rechnerisch erfasst und QTR + QG werden durch den Vergleich der gerechneten Belagstemperatur TB (Mess.) mit der gemessenen Belagstemperatur (Rechn.) optimiert; aus QIR und QG wird auf die herrschende Bewölkung geschlossen.

**Patentansprüche**

1.  Verfahren zur Erzeugung eines Glättefrühwarnsignals bei einem Strassenglättefrühwarnsystem mit automatischen Messstationen (AMS1-AMS5) mit Sonden, die die für die Erzeugung eines Glättefrühwarnsignals massgeblichen Grössen messen, wobei die automatischen Messstationen an bestimmten Stellen im Strassennetz (1,2,3,4) angeordnet sind, **dadurch gekennzeichnet, dass** zusätzlich mindestens eine virtuelle Messstation (VS1-VS11) betrieben wird, indem für mindestens eine andere Stelle als den bestimmten Stellen der automatischen Messstationen aus für diese andere Stelle ortsspezifischen Parametern und aus für diese andere Stelle relevanten Wetterdaten die für die Erzeugung eines Glättefrühwarnsignals massgeblichen Grössen berechnet werden, und dass aus diesen berechneten Grössen ebenfalls ein Glättefrühwarnsignal erzeugt wird.

2.  Verfahren nach Anspruch 1, **dadurch gekennzeichnet, dass** der virtuellen Messstation Wetterdaten vorbestimmter automatischer Messstationen (AMS1-AMS5) des Glättefrühwarnsystems zugeordnet sind.

3.  Verfahren nach Anspruch 1 oder 2, **dadurch gekennzeichnet, dass** der virtuellen Messstation Wetterdaten eines vom Glättefrühwarnsystem unabhängigen meteorologischen Messnetzes zugeordnet sind.

4.  Verfahren nach einem der Ansprüche 1 bis 3, **dadurch gekennzeichnet, dass** der virtuellen Messstation Parameter zugeordnet sind, welche bei vorbestimmten automatischen Messstationen enmittelbar sind.

5.  Verfahren nach einem der Ansprüche 1 bis 4, **dadurch gekennzeichnet, dass** der virtuellen Messstation Parameter zugeordnet sind, welche an der Stelle der virtuellen Messstation ermittelbar sind.

6.  Verfahren nach einem der Ansprüche 1 bis 5, **dadurch gekennzeichnet, dass** für die virtuelle Messstation die massgeblichen Grössen Belagstemperatur und die Belagsfeuchte berechnet werden.

7.  Verfahren nach einem der Ansprüche 1 bis 6, **dadurch gekennzeichnet, dass** für die virtuelle Mess-station die Gefrierpunkttemperatur der sich auf der Fahrbahn befindlichen Flüssigkeit von einer vorbestimmten mit einer Gefrierpunktsonde ausgerüsteten automatischen Messstation (AMS1-AMS5) übernommen wird.

8.  Verfahren nach einem der Ansprüche 1 bis 7, **dadurch gekennzeichnet, dass** für die virtuelle Messstation die Gefrierpunkttemperatur unter Verwendung des von einer Streueinrichtung übermittelten Mengenwertes Taumittel pro Flächeneinheit Strasse und der berechneten hydrischen Bilanz der Strasse an der Stelle der virtuellen Messstation bestimmt wird.

9.  Verfahren nach einem der Ansprüche 1 bis 8, **dadurch gekennzeichnet, dass** der Bewölkungsgrad ermittelt wird, indem die Belagstemperatur der Strasse für verschiedene angenommene Bewölkungsgrade errechnet wird und mit der gemessenen Belagstemperatur verglichen wird, und dass aus dem dem gemessenen Wert am nächsten kommenden Berechnungswert auf die Bewölkung geschlossen wird.

10. Verfahren zur Bereitstellung mindestens einer virtuellen Messstation (VS1-VS11) bei einem Strassenglättefrühwarnsystem, **dadurch gekennzeichnet, dass**

    -   die Stelle der virtuellen Messstation im Strassennetz festgelegt wird,
    -   dass bestimmt wird von welchen meteorologischen Messstationen welche meteorologischen Daten der virtuellen Messstation zugeordnet werden,
    -   dass der virtuellen Messstation ortsspezifische Parameter entsprechend der Stelle im Strassennetz zugeordnet werden.

11. Verfahren nach Anspruch 10, **dadurch gekennzeichnet, dass** die Stelle der virtuellen Messstation aufgrund einer thermografischen Aufnahme des Strassennetzes bestimmt wird.

12. Verfahren nach Anspruch 10 oder 11, **dadurch gekennzeichnet, dass** die Parameter ermittelt werden, indem am Standort einer automatischen Messstation (AMS1-AMS5) eine virtuelle Messstation eingerichtet wird und ausgehend von einer Annahme mindestens eines Parameterwertes die Belagstemperatur und/oder die Belagsfeuchte für die virtuelle Messstation berechnet wird, dass der oder die berechneten Werte mit den entsprechenden Messwerten der automatischen Messstation verglichen werden, und dass der mindestens eine Parameterwert geändert und die Schritte wiederholt werden, bis die Abweichung der berechneten und gemessenen Werte eine vorbestimmte Grösse erreicht oder unterschreitet, und dass die ermittelten Parameter einer virtuellen Messstation mit gleichen oder ähnlichen Strassenverhältnissen und/oder Lage im Strassennetz zugeordnet werden.

**13.** Verfahren nach einem der Ansprüche 10 bis 12, **dadurch gekennzeichnet, dass** Parameter am Ort der virtuellen Station durch eine temporäre Messanordnung ermittelt und der virtuellen Messstation zugeordnet werden.

**14.** Strassenglättefrühwarneinrichtung mit mindestens einer automatischen Messstation (AMS1-AMS5) mit Sonden an einer bestimmten Stelle des Strassennetzes (1-4) und mindestens einer mit dieser verbundenen Auswerteinrichtung (5), welche zur Erzeugung eines Glättefrühwarnsignals aus gemessenen strassenglättespezifischen Grössen ausgestaltet ist, **dadurch gekennzeichnet, dass** mindestens eine virtuelle Messstation an einer anderen Stelle als der bestimmten Stelle vorgesehen ist, dass die virtuelle Messstation zur Berechnung von strassenglättespezifischen Grössen aus Parametern, welche für die andere Stelle spezifisch sind, und aus Wetterdaten ausgestaltet ist, und dass für die berechneten Grössen ebenfalls ein Glättefrühwarnsignal erzeugbar ist.

**15.** Strassenglättefrühwarneinrichtung nach Anspruch 14, **dadurch gekennzeichnet, dass** die Auswerteinrichtung (5) mit Zuordnungsmitteln versehen ist, welche meteorologische Messwerte und/oder Parameter, welche bei einer automatischen Messstation ermittelt und an die Auswerteinrichtung übertragen worden sind, einer oder mehreren virtuellen Messstationen zuordnen.

**16.** Strassenglättefrühwarneinrichtung nach Anspruch 14 oder 15, **dadurch gekennzeichnet, dass** die Auswerteinrichtung Rechenmittel aufweist, welche zur Berechnung der Belagstemperatur und/oder Belagsfeuchte einer virtuellen Messstation als strassenglättespezifische Grössen aufgrund von Wetterdaten und Parametern ausgestaltet sind.

**17.** Strassenglättefrühwarneinrichtung nach einem der Ansprüche 14 bis 16, **dadurch gekennzeichnet, dass** die Auswerteinrichtung zum Empfang und/oder zur Berechnung der Gefrierpunkttemperatur für eine virtuelle Messstation ausgestaltet ist.

**18.** Strassenglättefrühwarneinrichtung nach einem der Ansprüche 14 bis 17, **dadurch gekennzeichnet, dass** sie Mittel zur Messung der Strassenbelagstemperatur und zur Berechnung der Strassenbelagstemperatur in Abhängigkeit von einem angenommenen Bewölkungsgrad aufweist sowie Vergleichsmittel zum Vergleich der gemessenen und der berechneten Strassenbelagstemperatur.

**Claims**

**1.** Process for producing an early warning signal of slick conditions in a system for early warning of slick road conditions with automatic measuring stations (AMS1-AMS5) with probes, which measure the quantities relevant for producing an early warning signal of slick road conditions, wherein the automatic measuring stations are arranged at particular locations in the road network (1, 2, 3, 4), **characterized in that** additionally at least one virtual measuring station (VS1-VS11) is operated by calculating the quantities relevant for producing an early warning signal of slick road conditions for at least one location other than the particular locations of the automatic measuring stations, based on parameters specific for this other location and on meteorological data relevant for this other location, and that an early warning signal of slick conditions is also produced from these calculated quantities.

**2.** Process according to claim 1, **characterized in that** meteorological data from predetermined automatic measuring stations (AMS1-AMS5) of the system for early warning of slick conditions are assigned to the virtual measuring station.

**3.** Process according to claims 1 or 2, **characterized in that** meteorological data from a meteorological measuring network independent of the system for early warning of slick conditions are assigned to the virtual measuring station.

**4.** Process according to one of claims 1 to 3, **characterized in that** parameters which can be ascertained at predetermined automatic measuring stations are assigned to the virtual measuring station.

5. Process according to one of claims 1 to 4, **characterized in that** parameters which can be ascertained at the site of the virtual measuring station are assigned to the virtual measuring station.

6. Process according to one of claims 1 to 5, **characterized in that** the relevant quantities road surface temperature and road surface moisture are calculated for the virtual measuring station.

7. Process according to one of claims 1 to 6, **characterized in that** the freezing point temperature of the liquid present on the roadway for the virtual measuring station, is taken from a predetermined automatic measuring station (AMS1-AMS5) equipped with a freezing point probe.

8. Process according to one of claims 1 to 7, **characterized in that** the freezing point temperature for the virtual measuring station is determined by using the amount of melting agent per area unit of road transmitted from a scattering device and the calculated hydric balance of the road at the site of the virtual measuring station.

9. Process according to one of claims 1 to 8, **characterized in that** the degree of cloud cover is ascertained by calculating the surface temperature of the road for various assumed degrees of cloud cover and comparing it with the measured road surface temperature, and that a conclusion is drawn about the cloud cover from the calculated value closest to the measured value.

10. Process for the provision of at least one virtual measuring station (VS1-VS11) in a system for early warning of slick road conditions, **characterized in that**

   - the site of the virtual measuring station in the road system is stipulated,
   - a determination is made about which meteorological data from which meteorological measuring stations are assigned to the virtual measuring station,
   - and location-specific parameters corresponding to a location in the road network are assigned to the virtual measuring station.

11. Process according to claim 10, **characterized in that** the site of the virtual measuring station is determined on the basis of a thermographic recording of the road system.

12. Process according to claims 10 or 11, **characterized in that** the parameters are ascertained by setting up a virtual measuring station at the site of an automatic measuring station (AMS1-AMS5) and that, starting from an assumption of at least one parameter value, the road surface temperature and/or the road surface moisture is calculated for the virtual measuring station, that the calculated value(s) are compared with the corresponding measured values of the automatic measuring station, and that at least one parameter value is changed and the steps are repeated until the difference between the calculated and measured values reaches a predetermined quantity or falls below it, and that the ascertained parameters are assigned to a virtual measuring station with the same or similar road conditions and/or position in the road system.

13. Process according to one of claims 10 to 12, **characterized in that** parameters are ascertained at the site of the virtual station by means of a temporary measuring arrangement and are then assigned to the virtual measuring station.

14. Device for early warning of slick road conditions having at least one automatic measuring station (AMS1-AMS5) with probes at a particular location of the road network (1-4) and at least one evaluating device (5) connected to this that is designed to produce an early warning signal of slick conditions from specific measured road slickness quantities, **characterised in that** at least one virtual measuring station at an other location than the particular location is provided, that the virtual measuring station is designed for the calculation of specific road slickness quantities from parameters that are specific for the other location and from meteorological data, and that for the calculated quantities an early warning signal of slick conditions can likewise be produced.

15. Device for early warning of slick road conditions according to claim 14, **characterized in that** the evaluating device (5) is provided with assigning means that assign meteorological measured values and/or parameters that have been ascertained at an automatic measuring station and transmitted to the evaluating device, to one or more virtual measuring stations.

16. Device for early warning of slick road conditions according to claims 14 or 15, **characterized in that** the evaluating device has calculating means that are designed for calculating the road surface temperature and/or the road surface moisture of a virtual measuring station as specific road slickness quantities based on meteorological data and on station parameters.

**17.** Device for early warning of slick road conditions according to one of claims 14 to 16, **characterized in that** the evaluating device is designed to receive and/or to calculate the freezing point temperature for a virtual measuring station.

**18.** Device for early warning of slick road conditions according to one of claims 14 to 17, **characterized in that** it has means for measuring the road surface temperature and for calculating the road surface temperature as a function of an assumed degree of cloud cover, as well as comparison means for comparing the measured and the calculated road surface temperature.

**Revendications**

**1.** Procédé pour déclencher un signal d'alerte au verglas dans un système d'avertissement prémonitoire de présence de verglas sur des routes comportant des stations automatiques de mesure (AMS1 - AMS5) avec des sondes qui mesurent les valeurs significatives pour un signal prémonitoire de présence de verglas, les stations automatiques étant disposées à des emplacements déterminés du réseau routier (1, 2, 3, 4), **caractérisé en ce qu'**on utilise en plus au moins une station virtuelle de mesure (VS1 - VS11) définie pour au moins un emplacement différant des emplacements déterminés occupés par les stations automatiques et qu'on calcule, à partir des paramètres locaux valides pour cet emplacement différent et des données météorologiques valables à cet emplacement, les valeurs significatives pour la génération d'un signal prémonitoire de présence de verglas, et qu'on génère à partir de ces valeurs calculées un signal prémonitoire de présence de verglas.

**2.** Procédé selon la revendication 1, **caractérisé en ce que** des données météorologiques de certaines stations automatiques déterminées (AMS1 - AMS5) du système d'avertissement prémonitoire sont attribuées à la station virtuelle de mesure.

**3.** Procédé selon une des revendications 1 ou 2, **caractérisé en ce que** des données météorologiques émanants d'un réseau de mesures météorologiques indépendant du système d'avertissement prémonitoire sont attribuées à la station virtuelle de mesure.

**4.** Procédé selon une des revendications précédentes, **caractérisé en ce que** des paramètres pouvant être déterminés à l'emplacement de certaines stations automatiques prédéterminées sont attribuées à la station virtuelle de mesure.

**5.** Procédé selon une des revendications précédentes, **caractérisé en ce que** des paramètres pouvant être déterminés à l'emplacement de la station virtuelle de mesure sont attribuées à la station virtuelle de mesure.

**6.** Procédé selon une des revendications précédentes, **caractérisé en ce que** les valeurs significatives de la température et l'humidité du revêtement pour la station virtuelle de mesure sont calculées.

**7.** Procédé selon une des revendications précédentes, **caractérisé en ce que** la température du congélation utilisée pour la station virtuelle de mesure est la température de congélation d'un liquide se trouvant sur le revêtement à l'emplacement d'une station automatique de mesure prédéterminée (AMS1 - AMS5) munie d'un détecteur de température de congélation.

**8.** Procédé selon une des revendications précédentes, **caractérisé en ce que** la température de congélation de la station virtuelle de mesure est déterminée à partir de la quantité de produit antigel par unité de surface de route transmise par une unité d'épandage d'antigel, et à partir du bilan hydraulique de la route calculé à l'emplacement de la station virtuelle de mesure.

**9.** Procédé selon une des revendications précédentes, **caractérisé en ce qu'**on détermine le degré de nébulosité en calculant la température du revêtement pour plusieurs degrés de nébulosité imaginés, en comparant la valeur calculée avec la température mesurée du revêtement, et en déterminant le degré de nébulosité à partir de la valeur calculée la plus proche de la valeur mesurée.

**10.** Procédé pour créer au moins une station virtuelle de mesure (VS1 - VS11) dans un système d'avertissement prémonitoire de routes verglacées, **caractérisé en ce que**

- l'on choisit l'emplacement de la station virtuelle de mesure sur le réseau routier,
- l'on détermine quelles données météorologiques issues de quelles stations de mesures météorologiques seront attribuées à la station virtuelle de mesure,
- l'on attribue à la station virtuelle de mesure des paramètres spécifiques locaux en fonction de sa position dans le réseau routier.

**11.** Procédé selon la revendication 10, **caractérisé en ce qu'**on choisit l'emplacement de la station virtuelle de mesure à partir d'un relevé thermographique du réseau routier.

**12.** Procédé selon une des revendications 10 ou 11, **caractérisé en ce qu'**on détermine les paramètres en installant une station virtuelle de mesure à l'emplacement d'une station automatique de mesure (AMS1 - AMS5), qu'on calcule à partir d'au moins une valeur supposée d'un paramètre la température du revêtement et/ou l'humidité du revêtement pour la station virtuelle de mesure, qu'on compare la ou les valeurs calculées avec les valeurs correspondantes de la station automatique de mesure, qu'on modifie la ou les valeurs supposées du ou des paramètres, et qu'on répète ces étapes jusqu'à ce que la différence entre les valeurs calculées et les valeurs mesurées devienne égale ou inférieure à une valeur prédéterminée, et qu'on attribue les paramètres ainsi obtenues à une station virtuelle de mesure présentant des conditions routières et/ou une position dans le réseau routier semblables ou identiques.

**13.** Procédé selon une des revendications 10 à 12, **caractérisé en ce qu'**on détermine des paramètres à l'emplacement de la station virtuelle de mesure à l'aide d'un poste de mesure temporaire, et qu'on attribue ces paramètres à la station virtuelle de mesure.

**14.** Dispositif d'alerte prémonitoire au verglas avec au moins une station automatique de mesure (AMS1 - AMS5) comportant des sondes et placée à un emplacement déterminé du réseau routier (1 - 4), et au moins un dispositif d'exploitation (5) connecté à cette station et agencé pour générer un signal annonçant du verglas à partir de valeurs spécifiques pour la formation de verglas sur les routes, **caractérisé en ce qu'**au moins une station virtuelle de mesure est prévue à un emplacement distinct de l'emplacement déterminé, que la station virtuelle de mesure est agencée pour calculer, à partir de paramètres caractéristiques pour l'emplacement distinct et à partir de données météorologiques, des grandeurs essentielles pour évaluer le risque de verglas sur la route, et qu'un signal prémonitoire de verglas peut aussi être généré à partir de ces grandeurs calculées.

**15.** Dispositif d'alerte prémonitoire de verglas selon la revendication 14, **caractérisé en ce que** le dispositif d'exploitation (5) comporte des moyens d'attribution qui attribuent à une ou plusieurs stations virtuelles de mesure des mesures météorologiques et/ou des paramètres déterminées à l'emplacement d'une station automatique de mesure et transmis au dispositif d'exploitation.

**16.** Dispositif d'alerte prémonitoire de verglas selon une des revendications 14 ou 15, **caractérisé en ce que** le dispositif d'exploitation comprend des moyens de calcul appropriés pour calculer la température et/ou de l'humidité du revêtement d'une station virtuelle de mesure sous forme de valeurs significatives pour le risque de verglas obtenues à partir de données météorologiques et de paramètres.

**17.** Dispositif d'alerte prémonitoire de verglas selon une des revendications 14 à 16, **caractérisé en ce que** le dispositif d'exploitation est agencé pour recevoir et/ou pour calculer la température de congélation valable pour une station virtuelle de mesure.

**18.** Dispositif d'alerte prémonitoire de verglas selon une des revendications 14 à 17, **caractérisé en ce qu'**il comporte des moyens pour mesurer la température du revêtement d'une route et pour calculer la température du revêtement d'une route en fonction d'un degré de nébulosité supposé, ainsi que des moyens pour comparer la température mesurée et la température calculée du revêtement.

Fig. 1

# Fig. 2

START

Parametrisation:
Best guess.

VS Daten rechnen
→ TB, F

Parametrisation
gezielt
verbessern

AMS Daten erfassen
→ TB', F'

Statistik:
TB, TB' vergleichen
F, F' vergleichen

≠

=

END

# Fig. 3

AMS - Daten erfassen

AMS - Daten gezielt an
VS übertragen

AMS    AMS    AMS

VS  VS  VS  VS  VS  VS  VS

übrige  VS - Daten
rechnen

Glättefrühwarnung
für VS abgeben

# Fig. 4a

**Pyrradiometer**

QG + QIR gemessen

# Fig. 4b

**Strasse**

QIR + QG optimiert durch Vergleich
TB (Mess.) - TB (Rechn.)